Europäisches Patentamt

European Patent Office

Office européen des brevets

(11) Numéro de publication : **0 409 721 B1**

## (12) FASCICULE DE BREVET EUROPEEN

(45) Date de publication du fascicule du brevet :
**29.06.94 Bulletin 94/26**

(51) Int. Cl.$^5$ : **B64G 1/00, H04B 7/19**

(21) Numéro de dépôt : **90402056.7**

(22) Date de dépôt : **17.07.90**

(54) **Satellite et procédé de mise en orbite par assistance gravitationnelle.**

(30) Priorité : **19.07.89 FR 8909713**

(43) Date de publication de la demande :
**23.01.91 Bulletin 91/04**

(45) Mention de la délivrance du brevet :
**29.06.94 Bulletin 94/26**

(84) Etats contractants désignés :
**AT BE CH DE DK ES FR GB GR IT LI LU NL SE**

(56) Documents cités :
**US-D- 100 604**
**D. G. King-Hele: "AN INTRODUCTION TO TRANSFER ORBITS. Technical Note No: Space17" septembre 1962, ROYAL AIRCRAFT ESTABLISHMENT, FARNBOROUGH**

(56) Documents cités :
**INTER-ELECTRONIQUE. vol. 27, no. 37, 24 janvier 1972, PARIS FR pages 14 - 15;A.THIBOUMERY: "Le satellite europeen HEOS-A2 avant sa mise en orbite"**
**ESA Bulletin No. 48, novembre 1986, Noordwijk (NL), pages 24 - 28; R.G. Marsden et K.-P. Wenzel: "Ulysses - The voyage must wait"**

(73) Titulaire : **CENTRE NATIONAL D'ETUDES SPATIALES**
**2, Place Maurice Quentin**
**F-75001 Paris (FR)**

(72) Inventeur : **Dulck, Jean-François**
**5 rue Garcia Lorca**
**F-31520 Ramonville St Agne (FR)**

(74) Mandataire : **Mongrédien, André et al**
**c/o BREVATOME**
**25, rue de Ponthieu**
**F-75008 Paris (FR)**

EP 0 409 721 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un satellite destiné à être mis en orbite autour de la Terre sur une orbite inclinée par rapport au plan équatorial et un procédé de mise en orbite d'un tel satellite.

L'invention trouve un domaine privilégié d'application en télécommunications spatiales.

Bien que l'invention s'applique à tout type de satellite et à tout type d'orbite, on considèrera plus particulièrement par la suite le cas des satellites à orbite elliptique inclinée par rapport au plan équatorial.

A titre d'exemple, on se référera ainsi aux satellites destinés au système de communication que le Demandeur désigne par "SYCOMORES", abréviation de "Système de Communications avec des Mobiles Relayés par Satellites".

Un tel système de communications est décrit dans la demande de brevet français N° **88/02632** déposée le 2 Mars 1988 par le Demandeur.

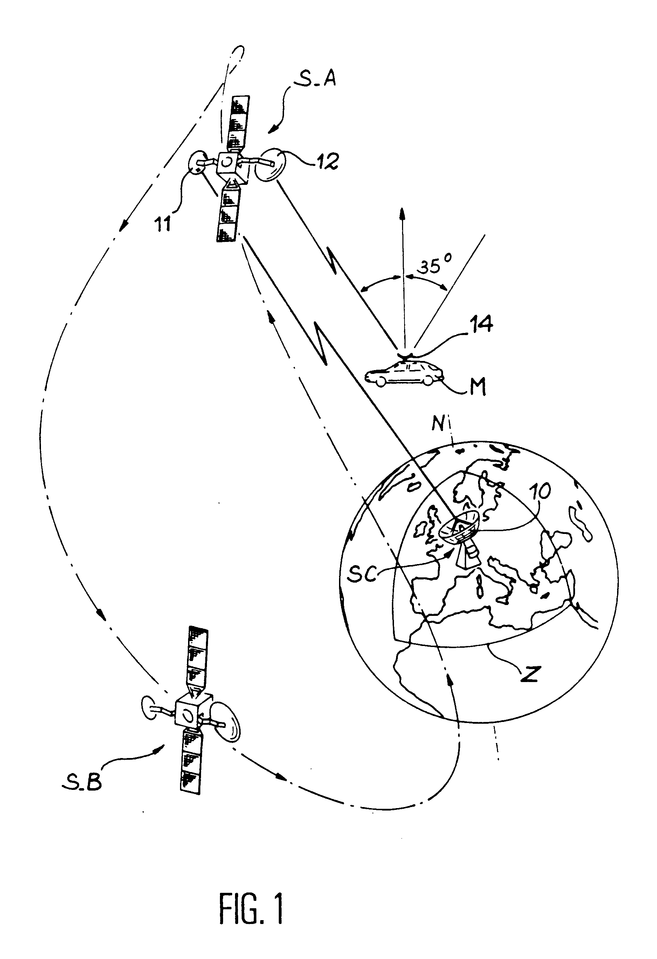

La Figure 1 rappelle brièvement en quoi consiste ce système.

Au centre d'une zone de couverture Z, en forme de triangle sphérique, se trouve une station centrale SC. Deux satellites géosynchrones S-A et S-B ont des orbites elliptiques de paramètres identiques. A titre explicatif, ces paramètres peuvent être les suivants :

- apogée situé à environ 50 543,4 km,
- périgée située à environ 21 028,6 km,
- demi-grand axe de 42 164 km,
- inclinaison de 63°4,
- argument du périgée 270,
- excentricité de l'orbite 0,35.

Chaque satellite comprend une ou des antennes 11 et 12 ; chaque antenne est pointée vers la station centrale SC pendant toute la durée où le satellite défile au-dessus de la zone de couverture.

La station centrale comprend une station de connexion et une station de contrôle.

Est également représenté, sur la figure 1, un mobile M (qui, cela va sans dire, est situé dans la zone Z mais qui est représenté au-dessus de celle-ci pour plus de clarté). Ce mobile est équipé d'une antenne 14 dont l'axe pointe en permanence vers le zénith.

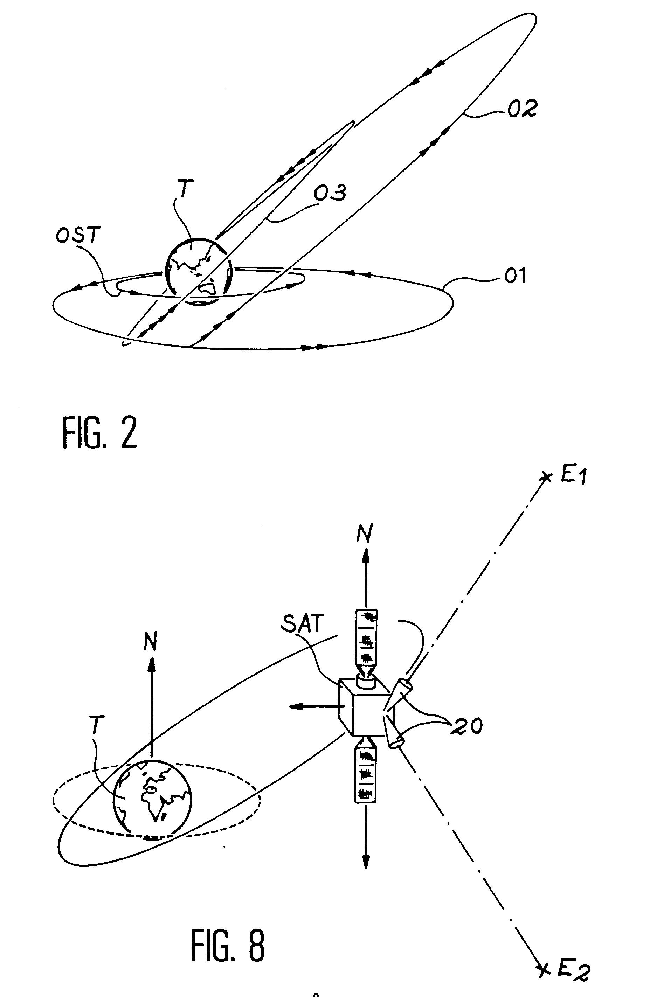

Pour la mise à poste de tels satellites, bien des stratégies sont possibles. On n'en décrira qu'une en liaison avec la figure 2. Cette mise à poste utilise la fusée ARIANE IV et nécessite trois impulsions. Lors du lancement, le satellite est accompagné d'un satellite géostationnaire ordinaire. L'ensemble des deux satellites est placé sur l'orbite de transfert standard de la fusée ARIANE IV, qui est une orbite située dans un plan quasi-équatorial (inclinaison de 7°), avec un périgée à 200 km, un apogée à 35 975 km et un argument du périgée de 178° (orbite marquée OST sur la figure 2).

A proximité du périgée, une fusée du satellite est allumée pour une première impulsion apte à porter l'apogée à 98 000 km, l'orbite restant dans le même plan (orbite 01). Cette impulsion peut être décomposée en deux ou trois impulsions.

A proximité de l'apogée de l'orbite 01, une nouvelle impulsion est communiquée au satellite pour changer le plan de son orbite. L'inclinaison de ce plan est proche de celle du plan de l'orbite définitive (à savoir 63°4). Cette poussée est la plus importante et peut être décomposée en deux ou trois poussées. L'orbite devient 02.

Enfin, en un point approprié de cette orbite, une troisième poussée est communiquée au satellite pour lui donner l'orbite définitive.

Si cette stratégie est satisfaisante à certains égards, elle présente néanmoins un inconvénient. En effet, elle oblige à basculer le plan orbital, lors du passage de l'orbite 01 à l'orbite 02, ce qui entraîne une grande consommation d'ergols. Il serait souhaitable de pouvoir diminuer cette consommation pour augmenter la masse de la charge utile.

La présente invention vise justement ce but. A cette fin, elle propose un satellite et un procédé de transfert tels que le basculement du plan orbital s'effectue sans consommation d'ergols.

Pour atteindre ce but l'invention préconise l'exploitation d'un effet en soi connu, mais appliqué jusqu'ici à d'autres fins. Cet effet est l'assistance gravitationnelle. Déjà utilisé pour les sondes interplanataires, il est obtenu en faisant survoler une planète par la sonde. La masse et la vitesse de la planète survolée ont pour effet de modifier la direction du vecteur vitesse de la sonde (vitesse par rapport à la planète), la norme de cette vitesse restant sensiblement constante.

La conséquence de cet effet gravitationnel est que l'orientation et la norme du vecteur vitesse relative sont modifiées entre l'arrivée à proximité de la planète et le départ. Il y a alors basculement du plan de l'orbite.

Cet effet, dit d'assistance gravitationnelle a été utilisé pour placer des sondes sur des orbites héliocentriques dans des plans hors du plan de l'écliptique, sans qu'il soit nécessaire de réaliser une manoeuvre coûteuse en ergols.

2

C'est ce qui est décrit par exemple dans le document ESA Bulletin, n° 48, novembre 1986, Noordwijk NL., pages 24-28 ; R.G. MARSDEN et K.P. WENZEL : "Ulysses-The voyage must wait".

Selon l'invention, on applique et on adapte cette technique au cas de l'assistance gravitationnelle lunaire. Le système mis en jeu n'est donc plus héliocentrique (soleil, planète, sonde) mais géocentrique (terre, lune, satellite).

De manière plus précise, l'invention a pour objet un satellite destiné à être mis en orbite autour de la terre sur une orbite elliptique inclinée par rapport au plan équatorial, ce satellite ayant des moyens de télécommunications avec une station de commande et de contrôle située au sol, caractérisé par le fait qu'il comprend :

- des moyens pour communiquer au satellite, préalablement mis sur une première orbite de transfert standard située dans un plan quasi-équatorial, une première poussée exercée dans ce plan et apte à transférer le satellite sur une deuxième orbite située dans le même plan quasi-équatorial,
- des moyens de stabilisation trois axes de l'attitude du satellite,
- des moyens pour ajuster la vitesse du satellite sur sa deuxième orbite pour qu'il pénètre dans la sphère d'influence de la Lune et en ressorte, le satellite voyant son vecteur vitesse changer de direction naturellement dans cette sphère et passant sur une troisième orbite située dans un plan qui est incliné par rapport au plan quasi-équatorial,
- des moyens pour communiquer au satellite une nouvelle poussée dans ce nouveau plan pour le transférer sur une quatrième orbite qui est l'orbite elliptique souhaitée.

De préférence, les moyens pour communiquer au satellite les poussées nécessaires sont aptes à fractionner ces poussées en plusieurs poussées élémentaires.

La présente invention a également pour objet un procédé de mise en orbite d'un tel satellite. Selon ce procédé :

- on met le satellite sur une première orbite de transfert standard située dans un plan quasi-équatorial,
- on exerce une poussée dans ce plan apte à transférer le satellite sur une deuxième orbite située dans le même plan quasi-équatorial,
- on stabilise selon trois axes l'attitude du satellite,
- on ajuste la vitesse du satellite sur sa deuxième orbite circumlunaire pour qu'il pénètre dans la sphère d'influence de la Lune et en ressorte, le satellite voyant son vecteur vitesse changer de direction naturellement dans cette sphère, l'orbite du satellite passant ainsi sur une troisième orbite qui est située dans un plan qui est incliné par rapport au plan quasi-équatorial,
- on communique au satellite une nouvelle poussée dans ce nouveau plan pour le transférer sur une quatrième orbite qui est l'orbite elliptique souhaitée.

De préférence, on fractionne les poussées nécessaires en plusieurs poussées élémentaires.

Pour obtenir un gain net de poussée, certaines conditions doivent être respectées : l'altitude minimum du satellite par rapport à la Lune doit être inférieure à environ 4000 km, le satellite doit subir une déviation d'au moins 55° et l'excentricité de la troisième orbite doit être au moins égale à 0,82.

Grâce à l'invention, la somme des poussées requises se trouve réduite. Les écarts de vitesses sont en effet d'environ 690 m/s pour le transfert sur la deuxième orbite et de 1360 m/s pour le raccordement à l'orbite finale, soit au total environ 2050 m/s à comparer aux 2350 m/s avec la stratégie illustrée en figure 2 (et à comparer à 1700 m/s dans le cas de la mise à poste d'un satellite géostationnaire). L'augmentation permise pour la masse de la charge utile est de 60%, toutes choses égales par ailleurs. On passe ainsi une charge utile de 120 kg utilisée jusqu'ici et nécessitant un coût en ergol équivalent à 2350 m/s, à une charge utile de 200 kg avec la présente invention.

La mise en oeuvre de l'assistance gravitationnelle lunaire nécessite la résolution de problèmes de navigation sur l'orbite circumlunaire. Ces problèmes trouvent leur solution par l'utilisation d'un système de stabilisation dite "trois axes", pseudo-inertielle autour d'un axe Nord-Sud, utilisant des senseurs stellaires. Les effets de parallaxe deviennent alors négligeables.

Comme souligné plus haut, l'invention peut s'appliquer au transfert d'un satellite dans n'importe quel plan, depuis une orbite d'injection de type standard. Elle autorise également des missions secondaires lors du survol de la Lune, à des distances obligatoirement plus faibles que le rayon de la sphère d'influence (lequel est égal à 10,34 fois le rayon terrestre, soit 65 950 km environ).

De toute façon, les caractéristiques et avantages de l'invention apparaîtront mieux à la lumière de la description qui va suivre ; cette description porte sur des exemples de réalisation, donnés à titre explicatif et nullement limitatif, et elle se réfère à des dessins annexés sur lesquels :

- la figure 1, déjà décrite, illustre un système de communications par satellites,
- la figure 2, déjà décrite, illustre une stratégie de transfert selon l'art antérieur,
- la figure 3 montre schématiquement les différentes phases de mise en orbite selon l'invention,
- la figure 4 précise les différentes vitesses et poussées mises en jeu,

- la figure 5 montre la modification du vecteur vitesse à la traversée de la sphère d'influence de la Lune,
- la figure 6 montre les variations de l'excentricité en fonction du coût du transfert,
- la figure 7 est un abaque correspondant à la traversée de la sphère d'influence de la Lune,
- la figure 8 montre l'attitude du satellite sur sa trajectoire finale.

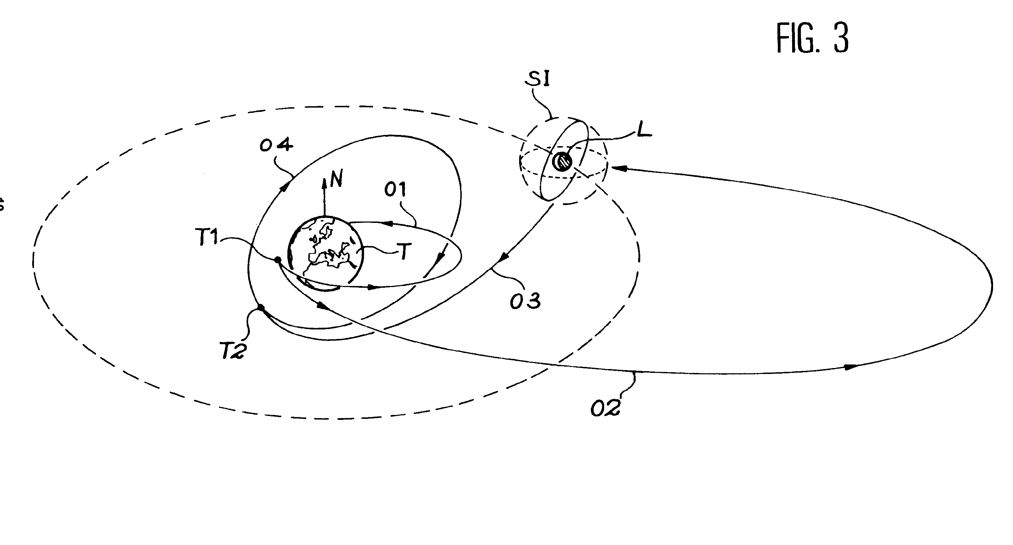

Sur la figure 3 est représenté, schématiquement, le principe de transfert par assistance gravitationnelle lunaire selon l'invention. Le satellite est d'abord transféré sur une orbite standard 01 située dans un plan quasi-équatorial, qui est en pratique l'orbite OST de la figure 1, (dite encore GTO pour "Geostationary Transfer Orbit") ; en T1 on transfère le satellite sur une orbite 02 circumlunaire toujours située dans le plan quasi-équatorial. Pratiquement, on choisira une orbite très elliptique dont le grand axe est, par exemple, voisin de deux fois la distance Terre-Lune, soit 768 800 km environ. Le satellite pénètre dans la sphère d'influence SI de la Lune et ressort de cette sphère sur une trajectoire 03, dont le plan est très incliné par rapport au plan équatorial. En T2, on injecte le satellite sur l'orbite définitive 04, dans le même plan que l'orbite 03.

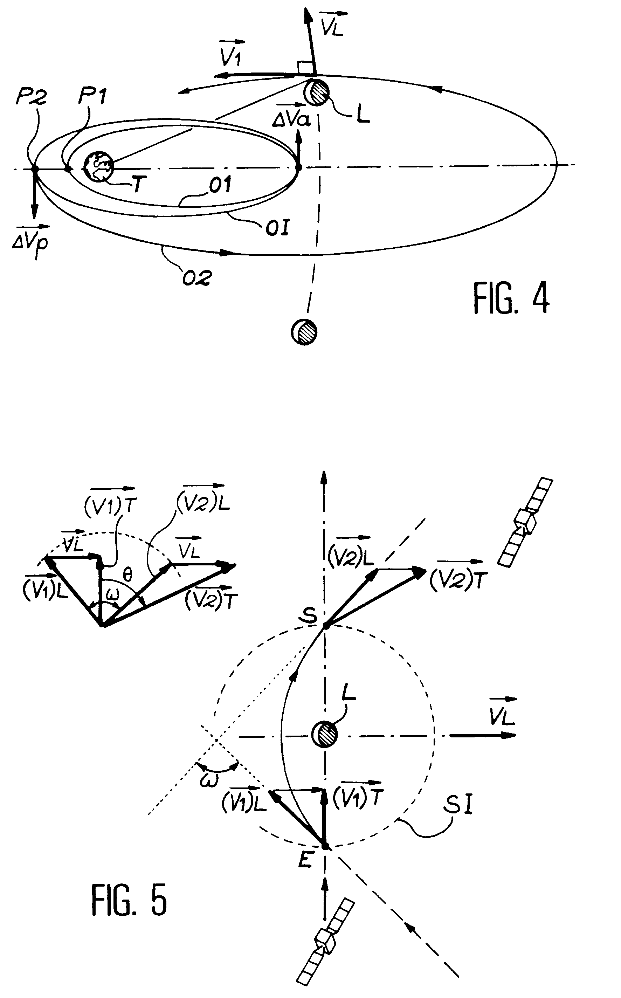

La figure 4 permet de préciser quelque peu les différents paramètres mis en jeu dans un mode de mise en oeuvre particulier.

Sur cette figure sont représentées trois orbites : l'orbite 01, qui est l'orbite géostationnaire de transfert classique, une orbite intermédiaire 0I, et l'orbite circumlunaire 02.

L'impulsion $\Delta V1$ a pour but de relever l'altitude du périgée de l'orbite de transfert GTO pour la faire passer de 200 à 450 km.

L'impulsion $\Delta V2$ a pour but de passer sur l'orbite circumlunaire, avec un demi grand axe égal à la distance Terre-Lune, soit 384 402 km.

Compte tenu de la très grande excentricité de l'orbite circumlunaire, lorsque le satellite pénètre dans la sphère d'influence de la Lune, ou, si l'on veut, vient "couper" l'orbite de la Lune, sa vitesse par rapport à la Terre V1 est pratiquement la même que celle de la Lune VL par rapport à la Terre. De plus, les deux vecteurs vitesse sont pratiquement perpendiculaires.

Les caractéristiques principales des trois orbites 01, 0I et 02 sont données dans le tableau suivant où $\underline{a}$ désigne le demi-grand axe, $\underline{e}$ l'excentricité, zp l'altitude du périgée, za l'altitude de l'apogée, Va la vitesse à l'apogée et Vp la vitesse au périgée.

|     | Orbite 01 | Orbite 0I | Orbite 03 |
| --- | --- | --- | --- |
| a   | 24 465,5 km | 24 590,5 km | 384 402 km |
| e   | 0,731 | 0,722 | 0,982 |
| zp  | 200 km | 450 km | 450 km |
| za  | 35 975 km | 35 975 km | 7618 84,76 km |
| Va  | 1591,18 m/s | 1617,67 m/s | 97,04 m/s |
| Vp  |  | 1U 020,26 m/s | 1U 685,41 m/s |

L'écart de vitesse à l'apogée entre les orbites 01 et 0I est donc de $\Delta Va = 26$ m/s et l'écart de vitesse au périgée entre les orbites 0I et 03 est de $\Delta Vp = 665,15$ m/s, soit au total :
$$\Delta V1 = \Delta Va + \Delta Vp = 691,65 \text{ m/s.}$$
C'est ce qui correspond à la valeur de 690 m/s annoncée plus haut pour la poussée $\Delta V1$, laquelle a donc été fractionnée en deux poussées, l'une d'apogée, l'autre de périgée.

La figure 5 montre la modification du vecteur vitesse à la traversée de la sphère d'influence de la Lune.

La Lune est repérée par la lettre L. Sa vitesse par rapport à la Terre est notée $\overrightarrow{VL}$ et est supposée être dirigée de la gauche vers la droite. La sphère d'influence est notée SI.

Le satellite S pénètre dans la sphère d'influence au point E avec une vitesse $\overrightarrow{(V1)}_T$ par rapport à la Terre. Dans un repère lié à la Lune, cette vitesse doit être composée avec la vitesse $\overrightarrow{VL}$ pour donner le vecteur $\overrightarrow{(V1)}_L$.

En traversant la sphère d'influence, le vecteur $\overrightarrow{(V1)}_L$ ne change pas de module mais sa direction bascule d'un angle $\omega$.

A la sortie S de la sphère d'influence, le vecteur vitesse du satellite, par rapport à la Lune, est devenu $\overrightarrow{(V2)}_L$. Il doit être composé avec la vitesse de la Lune $\overrightarrow{VL}$ pour obtenir le vecteur vitesse $\overrightarrow{(V2)}_T$ par rapport à la Terre.

Le vecteur vitesse du satellite, par rapport à la Terre, a donc basculé de $\overrightarrow{(V1)}_T$ à $\overrightarrow{(V2)}_T$, soit d'un angle $\theta$.

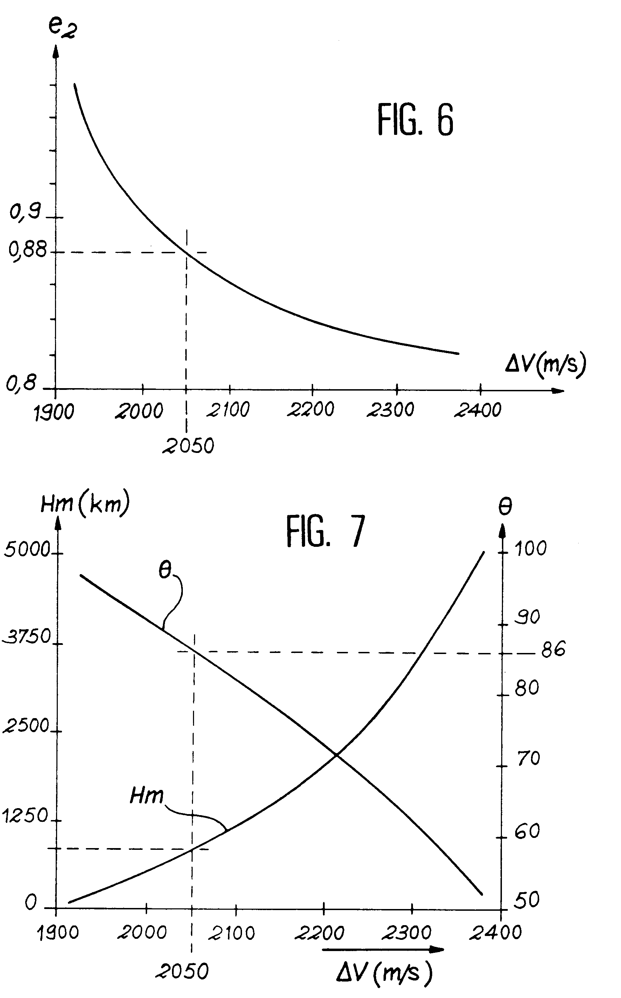

Les calculs effectués par l'inventeur permettent de tracer deux séries de courbes représentées sur les figures 6 et 7 :
- la figure 6 montre la relation entre l'excentricité e de l'orbite terrestre après sortie de la sphère d'influence, en fonction ou coût total de transfert $\Delta V$ en m/s, pour e=0,88 on a $\Delta V$=2050 m/s,
- la figure 7 montre un abaque reliant l'altitude minimale de survol de la Lune Hm exprimée en km, (ordonnées de gauche), le coût du transfert par assistance gravitationnelle $\Delta V$ (en abscisses exprimé en m/s) et la déviation $\theta$ au voisinage de la Lune (ordonnées de droite) exprimée en degrés.

Pour $\Delta V$=2050 m/s, l'altitude minimale est Hm=816 km et l'angle de déviation $\theta$ =86°. Le basculement du plan orbital est alors de 60°.

Enfin, la figure 8 montre l'attitude du satellite sur sa trajectoire finale. Le satellite est orienté selon trois axes, l'axe de tangage étant orienté Nord-Sud ; le satellite utilise entre autres un double senseur stellaire 20.

Naturellement, la station au sol contrôle et commande toutes ces opérations, à l'aide de moyens de calcul, de télécommunications, etc... qu'il n'est pas besoin de décrire car ils sont bien connus de l'homme de l'art.

## Revendications

1. Satellite destiné à être mis en orbite autour de la Terre sur une orbite elliptique inclinée par rapport au plan équatorial, ce satellite ayant des moyens de télécommunications avec une station de commande et de contrôle située au sol, caractérisé par le fait qu'il comprend :
   - des moyens pour communiquer au satellite, préalablement mis sur une première orbite de transfert standard (01) située dans un plan quasi-équatorial, une première poussée exercée dans ce plan apte à transférer le satellite sur une deuxième orbite de transfert (02) située dans le même plan quasi-équatorial,
   - des moyens de stabilisation trois axes de l'attitude du satellite,
   - des moyens pour ajuster la vitesse du satellite sur sa deuxième orbite pour qu'il pénètre dans la sphère d'influence de la Lune et en ressorte, le satellite ayant une altitude minimum (Hm) par rapport à la Lune de moins de 4000 km environ, le satellite subissant une déviation d'un angle ($\theta$) d'au moins 55°, le satellite passant ainsi sur une troisième orbite (03) située dans un plan qui est incliné par rapport au plan quasi-équatorial, cette troisième orbite (03) ayant une excentricité (e) au moins égale à 0,82,
   - des moyens pour communiquer au satellite une nouvelle poussée dans ce nouveau plan pour le transférer sur une quatrième orbite (04) qui est l'orbite elliptique souhaitée.

2. Satellite selon la revendication 1, caractérisé par le fait que les moyens pour communiquer au satellite lesdites poussées sont aptes à fractionner ces poussées en plusieurs poussées élémentaires.

3. Procédé de mise en orbite du satellite selon la revendication 1, caractérisé par le fait qu'il consiste à :
   - mettre le satellite sur une première orbite de transfert standard (01) située dans un plan quasi-équatorial,
   - exercer une poussée dans ce plan apte à transférer le satellite sur une deuxième orbite de transfert (02) située dans le même plan quasi-équatorial,
   - stabiliser selon trois axes l'attitude du satellite,
   - ajuster la vitesse du satellite sur la deuxième orbite (02) pour qu'il pénètre dans la sphère d'influence de la Lune et en ressorte, le satellite ayant une altitude minimum (Hm) par rapport à la Lune de moins de 4000 km environ, le satellite subissant une déviation d'un angle ($\theta$) d'au moins 55°, le satellite passant ainsi sur une troisième orbite (03) située dans un plan qui est incliné par rapport au plan quasi-équatorial, cette troisième orbite (03) ayant une excentricité (e) au moins égale à 0,82,
   - communiquer au satellite une nouvelle poussée dans ce nouveau plan pour le transférer sur une quatrième orbite (04) qui est l'orbite elliptique souhaitée.

**4.** Procédé selon la revendication 3, caractérisé par le fait que, pour communiquer au satellite lesdites poussées, on fractionne ces poussées en plusieurs poussées élémentaires.

## Patentansprüche

**1.** Satellit zur Verbringung in eine Erdumlaufbahn, in eine elliptische, im Verhältnis zur Äquatorebene geneigte Umlaufbahn, wobei der Satellit Mittel zur Telekommunikation mit einer auf dem Boden befindlichen Befehls- und Steuerungsstation aufweist, dadurch gekennzeichnet, daß er umfaßt:

- Mittel zum Übermitteln an den Satelliten, der zuvor auf eine erste Standardtransfer-Umlaufbahn (01) gebracht wurde, die in einer quasi-äquatorialen Ebene liegt, eines ersten Schubes, der in dieser Ebene durchgeführt wird und geeignet ist, den Satelliten auf eine zweite Transfer-Umlaufbahn (02) zu bringen, die sich in der gleichen quasi-äquatorialen Ebene befindet,
- dreiachsige Stabilisationsmittel für die Ausrichtung des Satelliten,
- Mittel zur Einstellung der Geschwindigkeit des Satelliten auf seiner zweiten Umlaufbahn, damit er in die Einflußsphäre des Mondes eintreten kann und aus ihr wieder austreten kann, wobei der Satellit im Verhältnis zum Mond eine Mindesthöhe (Hm) von etwa 4000 km hat, und der Satellit eine Ablenkung in einem Winkel ($\theta$) von mindestens 55° erfährt, wobei der Satellit in dieser Art und Weise auf eine dritte Umlaufbahn (03) übergeht, die in einer Ebene liegt, die im Verhältnis zu der quasi-äquatorialen Ebene geneigt ist, wobei diese dritte Umlaufbahn (03) eine Exzentrizität (e) von mindestens gleich 0,82 aufweist,
- Mittel zur Übermittlung an den Satelliten eines erneuten Schubes in dieser neuen Ebene, um ihn auf eine vierte Umlaufbahn (04) zu transferieren, die die gewünschte elliptische Umlaufbahn darstellt.

**2.** Satellit nach Anspruch 1, dadurch gekennzeichnet, daß die Mittel zur Übermittlung der Schübe an den Satelliten in der Lage sind, diese Schübe in mehrere Elementarschübe zu fraktionieren.

**3.** Verfahren zur Verbringung des Satelliten in eine Umlaufbahn nach Anspruch 1, dadurch gekennzeichnet, daß es besteht daraus,:

- daß der Satellit auf eine erste Standardtransfer-Umlaufbahn (01) verbracht wird, die in einer quasi-äquatorialen Ebene liegt,
- daß in dieser Ebene ein Schub durchgeführt wird, der geeignet ist, den Satelliten auf eine zweite Transfer-Umlaufbahn (02) zu bringen, die in der gleichen quasi-äquatorialen Eben liegt,
- daß die Ausrichtung des Satelliten nach drei Achsen stabilisiert wird,
- daß die Geschwindigkeit des Satelliten auf der zweiten Umlaufbahn (02) eingestellt wird, damit er in die Einflußsphäre des Mondes eintritt und aus ihr wieder austritt, wobei der Satellit im Verhältnis zum Mond eine Mindesthöhe (Hm) von etwa 4000 km hat, und der Satellit eine Ablenkung in einem Winkel ($\theta$) von mindestens 55° erfährt, wobei der Satellit auf diese Art und Weise auf eine dritte Umlaufbahn (03) übergeht, die sich in einer Ebene befindet, die im Verhältnis zur quasi-äquatorialen Ebene geneigt ist, wobei diese dritte Umlaufbahn (03) eine Exzentrizität (e) von mindestens gleich 0,82 aufweist,
- daß dem Satelliten in dieser neuen Ebene ein erneuter Schub übermittelt wird, um ihn auf eine vierte Umlaufbahn (04) zu transferieren, die die gewünschte elliptische Umlaufbahn darstellt.

**4.** Verfahren nach Anspruch 3, dadurch gekennzeichnet, daß zum Übermitteln der Schübe an den Satelliten diese Schübe in mehrere Elementarschübe fraktioniert werden.

## Claims

**1.** A satellite intended to be put into orbit around the Earth in an elliptical orbit inclined with respect to the equatorial plane, the satellite having means for telecommunications with a command and control station on the ground, characterised in that it comprises:

- means for communicating to the satellite, previously put into a first standard transfer orbit (01) situated in a quasi-equatorial plane, a first thrust operated in this plane capable of transferring the satellite into a second transfer orbit (02) situated in the same quasi-equatorial plane,
- means for stabilising the attitude of the satellite according to three axes,

- means for adjusting the speed of the satellite in its second orbit so that it enters and re-exits the sphere of influence of the Moon, the satellite having a minimum altitude (Hm) with respect to the Moon of less than approximately 4000 km, the satellite undergoing a deviation of an angle ($\theta$) of at least 55°, the satellite thus passing into a third orbit (03) situated in a plane which is inclined with respect to the quasi-equatorial plane, this third orbit (03) having an eccentricity (e) at least equal to 0.82,
- means for communicating a new thrust in this new plane to the satellite in order to transfer it onto a fourth orbit (04) which is the desired elliptical orbit.

2. A satellite according to claim 1, characterised in that the means for communicating the said thrusts to the satellite are capable of dividing these thrusts into a plurality of elementary thrusts.

3. A process for putting into orbit the satellite according to claim 1, characterised in that it consists of:
   - putting the satellite into a first standard transfer orbit (01) situated in a quasi-equatorial plane,
   - operating a thrust in this plane capable of transferring the satellite into a second transfer orbit (02) situated in the same quasi-equatorial plane,
   - stabilising the attitude of the satellite according to three axes,
   - adjusting the speed of the satellite in the second orbit (02) so that it enters and re-exits the sphere of influence of the Moon, the satellite having a minimum altitude (Hm) with respect to the Moon of less than approximately 4000 km, the satellite undergoing a deviation of an angle ($\theta$) of at least 55°, the satellite thus passing into a third orbit (03) situated in a plane with is inclined with respect to the quasi-equatorial plane, this third orbit (03) having an eccentricity (e) at least equal to 0.82,
   - communicating a new thrust in this new plane to the satellite in order to transfer it into a fourth orbit (04) which is the desired elliptical orbit.

4. A process according to claim 3, characterised in that in order to communicate the said thrusts to the satellite these thrusts are divided into a plurality of elementary thrusts.

FIG. 1

FIG. 2

FIG. 8

FIG. 3

FIG. 4

FIG. 5

FIG. 6

FIG. 7